# EUROPÄISCHE PATENTSCHRIFT

(11) **EP 2 389 807 B1**
(45) Veröffentlichungstag und Bekanntmachung des Hinweises auf die Patenterteilung: **22.08.2018**
(21) Anmeldenummer: 11166681.4
(22) Anmeldetag: 19.05.2011
(51) Int. Cl.: A23L 5/10, A21B 3/04, F24C 15/16

(54) **Ofen und Verfahren zum Behandeln von Gargut in einem Ofen bei Unterdruck**
Oven and method for treating foods in an oven under reduced pressure
Four et procédé de traitement d'aliments dans un four à pression réduite

(30) Priorität: 26.05.2010 DE 102010029328
(43) Veröffentlichungstag der Anmeldung: 30.11.2011
(73) Patentinhaber: BSH Hausgeräte GmbH, 81739 München (DE)
(72) Erfinder: Vollmar, Daniel, 83278, Traunstein (DE); Wiedenmann, Reinhard, 76356, Weingarten (DE)

(56) Entgegenhaltungen:
- DE-A1- 10 258 727
- DE-A1- 19 801 895
- GB-A- 963 473
- JP-A- 2002 159 397
- JP-A- 2008 175 421

## Beschreibung

Die Erfindung betrifft ein System mit einem Ofenzubehör und mit einem Ofen, wobei der Ofen einen Garraum mit einer Rückwand aufweist, der Ofen mindestens eine Unterdruckpumpe und mindestens einen an die Unterdruckpumpe angeschlossenen, in den Garraum ragenden Absauganschluss aufweist, das Ofenzubehör mindestens zwei Zubehörteile, die miteinander unterdruckdicht verschließbar sind, aufweist und eines der Zubehörteile einen Absaugstutzen aufweist. Die Erfindung betrifft auch ein Verfahren zum Behandeln, insbesondere Wärmebehandeln, von Gargut, insbesondere Backgut, in einem Ofen.
Es besteht der Wunsch, bestimmtes Gargut, z.B. Brot oder Gebäck usw. ('Backgut'), luftig und locker herzustellen. Dazu ist bisher eine Verwendung von Triebmitteln (Backpulver, Hefe usw.) in dem Backgut bekannt.
JP 2008175421 A offenbart einen Mikrowellenofen, welcher einen Unterdruck herstellen kann und mittels dessen ein Unterdruckgaren durchführbar ist. Dazu ist ein Mikrowellenofen mit einem Behandlungsraum, welcher Mikrowellenofen mindestens eine Unterdruckpumpe und mindestens einen an die Unterdruckpumpe angeschlossenen, in den Behandlungsraum ragenden Absauganschluss aufweist. Das Dokument offenbart die Merkmale des Oberbegriffes des Anspruchs 1. GB 963 473 A offenbart ein Verfahren zum Trocknen von Speisen, in welchem die Speise in einem im Wesentlichen nicht kompaktierten Zustand unter Unterdruck und bei einer Temperatur oberhalb des Gefrierpunkts von Wasser Mikrowellen ausgesetzt ist, welche Mikrowellen von solcher Intensität sind, dass in er Speise befindliches Wasser davor schnell verdampft wird und so erzeugter Wasserdampf kontinuierlich entfernt wird.
DE 198 01 895 A1 offenbart Verfahren zur Herstellung von Backwaren, bei dem der Teig im Backraum eines Backofens gegart wird, wodurch der Luftdruck im Backraum auf einen Wert unterhalb des Umgebungsdruckes eingestellt wird. Ferner offenbart ist ein Backofen zur Durchführung des Verfahrens für Haushalte und/oder Bäckereien, der mit einem beheizbaren Backraum ausgestattet und durch eine bewegliche Ofenklappe verschlossen ist, wobei der Backofen mit einer Vorrichtung ausgestattet ist, die Luft aus dem Backraum nach außen befördert und im Backraum einen Unterdruck gegenüber der Umgebung erzeugt.

DE 102 58 727 A1 offenbart einen Ofen mit einem Garraum angegeben, in dem Führungsmittel zur Aufnahme mindestens eines beheizbaren Gargefäßes vorgesehen sind, wobei das Gargefäß eine Substratschicht, insbesondere einen Boden, aufweist, an dessen Außenseite eine direkt beheizbare Heizleiterschicht vorgesehen ist, die durch eine Isolierschicht abgedeckt ist.

Es ist die **Aufgabe** der vorliegenden Erfindung, eine Möglichkeit zum Behandeln von Gargut, insbesondere Backgut, in einem Ofen mit einer reduzierten Menge an Triebmittel in dem Gargut bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein System mit einem mit einem Ofen und mit einem Ofenzubehör, wobei der Ofen einen Garraum mit einer Rückwand aufweist, der Ofen mindestens eine Unterdruckpumpe und mindestens einen an die Unterdruckpumpe angeschlossenen, in den Garraum ragenden Absauganschluss aufweist, das Ofenzubehör mindestens zwei Zubehörteile, die miteinander unterdruckdicht verschließbar sind, aufweist und eines der Zubehörteile einen Absaugstutzen aufweist. Der Absauganschluss ragt durch die Rückwand und ist zum unterdruckdichten Aufstecken des Absaugstutzens mittels einer Einschubbewegung des Ofenzubehörs ausgestaltet ist. Der Absaugstutzen ist ferner so an einer Rückseite des Zubehörteils angeordnet, dass er bei einer Beschickung des Garraums des Ofens mit dem Ofenzubehör mittels einer Beschickungsbewegung im Wesentlichen unterdruckdicht auf den mindestens einen Absauganschluss des Ofens aufsteckbar ist. Auch kann so eine Unterdruckverbindung zwischen dem Ofenzubehör und der Unterdruckpumpe ohne weitere Handgriffe durch einen Benutzer hergestellt werden, was besonders nutzerfreundlich ist.

Dieses System ergibt den Vorteil, dass mittels des Ofens ein Ofenzubehör evakuiert werden und auch während eines Wärmebehandlungsvorgangs auf Unterdruck gehalten werden kann. Es hat sich diesbezüglich gezeigt, dass sich - im Vergleich zu einer herkömmlichen Wärmebehandlung - insbesondere für Backgut ohne Triebmittel oder mit stark reduzierter Zugabe von Triebmittel gleich gute oder sogar bessere Backergebnisse insbesondere bezüglich einer Lockerheit und Luftigkeit erzielen lassen. Es lassen sich insbesondere Gebäcke mit noch luftigerer und lockerer Krume erzeugen als ohne ein Unterdruckbacken. Zudem lassen sich Backergebnisse mit großvolumigeren Lufteinschlüssen erzielen.

Es ist die erfindungsgemäße Ausgestaltung, dass der mindestens eine Absauganschluss durch eine Rückwand des Garraums ragt. Dies ergibt die Vorteile, dass erstens der Absauganschluss ein Einschieben des Ofenzubehörs nicht behindert und zweitens das Ofenzubehör besonders einfach durch ein Aufstecken oder Aufschieben an den Absauganschluss anschließbar ist.

Jedoch ist der Absauganschluss grundsätzlich jedoch nicht erfindungsgemäß auch an anderen Wänden des Garraums anordenbar, z.B. an einer Decke, einem Boden oder einer Seitenwand. In einer weiteren Alternative kann der Absauganschluss auch an einer Innenseite einer Garraumtür angeordnet sein, wobei die Unterdruckverbindung bei einem Schließen der Garraumtür hergestellt wird. Ein Absaugstutzen des Ofenzubehörs wird dann zweckmäßigerweise in Richtung der Garraumöffnung oder Beschickungsöffnung gerichtet sein.
Es ist eine Weiterbildung, dass der mindestens eine Absauganschluss als ein zumindest im Garraum im Wesentlichen steifes Element ausgestaltet ist, was z.B. ein Aufstecken erleichtert. Der Absauganschluss kann ferner senkrecht in den Garraum ragen, was einen Anschluss weiter vereinfachen kann.
Es ist noch eine Weiterbildung, dass der mindestens eine Absauganschluss einer jeweiligen Einschubebene des Ofens zugeordnet ist. Der Absauganschluss kann insbesondere oberhalb der zugeordneten Einschubebene angeordnet sein (aber noch unterhalb einer ggf. darüber angeordneten Einschubebene). Bei nur einem Absauganschluss kann dieser einer der Einschubebenen zugeordnet sein. Bei mehreren Absauganschlüssen können diese in Bezug auf die jeweiligen Einschubebenen auf gleiche Weise positioniert und ausgestaltet sein, so dass ein Benutzer eine Wahl zum Einschub des Ofenzubehörs in eine der Einschubebenen hat.

Es ist noch eine Ausgestaltung, dass der Ofen einen Drucksensor in oder an einer die Unterdruckpumpe mit dem Absauganschluss verbindenden Absaugleitung aufweist, wobei der Drucksensor vorzugsweise mit einer Steuereinheit zum Einstellen des Unterdrucks verbunden ist. Dadurch kann eine Regelschleife zum Einregeln des Unterdrucks auf einen vorbestimmten Sollwert realisiert werden. Die Anordnung an der Absaugleitung weist die Vorteile einer einfachen Anbringung und Auswechselung des Unterdrucksensors auf. Jedoch kann der Drucksensor auch an einer anderen Stelle angeordnet sein, welche mit dem Garraum drucktechnisch in Verbindung steht, z.B. an dem Absauganschluss oder an der Unterdruckpumpe.

Es ist noch eine weitere Ausgestaltung, dass der Ofen dazu eingerichtet ist, den Unterdruck während einer Heizphase zu erzeugen. Die Heizphase kann eine Aufwärmphase umfassen, bei welcher der Garraum auf eine Solltemperatur aufgeheizt wird, z.B. ausgehend von einer Raumtemperatur. Die Heizphase kann zusätzlich oder alternativ eine Wärmebehandlungsphase umfassen, während welcher der Garraum zum Wärmebehandeln des Garguts auf einer Solltemperatur gehalten wird. Es ist folglich auch eine Ausgestaltung, dass der Ofen dazu eingerichtet ist, den Unterdruck erst nach einer Aufwärmphase, insbesondere eines Garprogramms, zu erzeugen. Ferner kann der Unterdruck über den Großteil oder die gesamte Heizphase gehalten werden.

Es ist noch eine Ausgestaltung, dass der Unterdruck vor einer Heizphase hergestellt wird. Auch kann der Garraum folgend noch für eine vorbestimmte Zeitdauer in dem unbeheizten Zustand gehalten werden. Beispielsweise kann eine solche vorgelagerte Unterdruckphase zur Herstellung von Hefegebäck vorteilhaft sein.

Der Unterdruck kann vor, mit oder nach einem Ende der Heizphase aufgehoben werden. Der Unterdruck kann insbesondere auch ohne eine Heizphase erzeugt werden, z.B. falls nur ein Aufgehen des Garguts gewünscht ist. Das Erzeugen und das Aufheben des Unterdrucks können insbesondere jeweils mit einer definierten Druckänderung über die Zeit durchgeführt werden. Der absolute Wert des Unterdrucks und dessen Änderung über die Zeit kann insbesondere abhängig von einer Einstellung einer Speise oder einer Speisenkategorie durchgeführt werden. Die Einstellung kann von dem Benutzer oder mittels eines Garprogramms durchgeführt werden.

Der Unterdruck braucht grundsätzlich nicht nur im Rahmen eines Garprogramms aktivierbar zu sein, sondern kann in einer weiteren Variante auch von einem Nutzer unmittelbar aktiviert oder hergestellt werden, z.B. auf Knopfdruck oder eine entsprechende Menüeingabe. So mag ein Nutzer zum Herstellen von Hefegebäck zunächst die Unterdruckpumpe manuell aktivieren, ggf. mit einem einstellbaren Wert eines Unterdrucks, und danach erst die Heizphase manuell aktivieren.

Es ist noch eine Weiterbildung, dass der Ofen einen in den Garraum ragenden elektrischen Anschluss, insbesondere Steckanschluss, aufweist. Dadurch kann ein Ofenzubehör auch elektrisch angeschlossen werden, z.B. falls es eigene Wärmeerzeugungselemente aufweist.

Der Ofen kann beispielsweise ein Backofen, ein Herd, ein Mikrowellenofen, ein Dampfgargerät oder eine Kombination daraus sein.

Das Zubehörteil kann eine Unterdruckdichtung, insbesondere umlaufende Unterdruckdichtung, aufweisen. Dadurch kann ein Zubehörteil unterdruckdicht auf das jeweils andere Zubehörteil aufgesetzt werden und so einen evakuierbaren oder unterdruckfähigen Hohlraum oder Behandlungsraum erzeugen, welcher in den Ofen eingesetzt und dort zum Wärmebehandeln unter Unterdruck herangezogen werden kann. Das Ofenzubehör kann insbesondere mindestens ein Zubehörunterteil und ein Zubehöroberteil aufweisen, wobei das Zubehöroberteil auf das Zubehörunterteil aufsetzbar ist. Beispielsweise kann das Zubehörunterteil die Unterdruckdichtung aufweisen, z.B. mittels einer in eine umlaufende Nut eingebrachten Silikondichtung. Alternativ oder zusätzlich kann das Zubehöroberteil eine Unterdruckdichtung aufweisen, z.B. eine an seinem freien Rand angeordnete, insbesondere darin integrierte, Unterdruckdichtung. Allgemein kann das Ofenzubehör jedoch z.B. auch seitlich aufeinandersetzbare Zubehörteile aufweisen. Von diesen kann ein Zubehörteil den Absaugstutzen aufweisen.

Die Unterdruckdichtung kann insbesondere ein Dichtelement aufweisen, insbesondere aus Silikon. Die Unterdruckdichtung kann insbesondere elastisch sein, z.B. durch ein Vorsehen eines elastischen Dichtelements aus Silikon.

Das Zubehörteil (z.B. ein Zubehörunterteil und/oder ein Zubehöroberteil) weist einen Absaugstutzen zur Anbindung eines Absauganschlusses auf. Der Absaugstutzen kann insbesondere drucktechnisch mit dem Aufnahmebereich verbunden sein. So kann eine einfache Anbindung an den Absauganschluss des Ofens erreicht werden. Der Absaugstutzen ist an einer Rückseite des Zubehörteils angeordnet, welche dazu vorgesehen ist, einer mit einem Absauganschluss ausgestatteten Rückwand des Garraums gegenüberzuliegen. Insbesondere das Zubehöroberteil erlaubt eine hochgradige Entwurfsfreiheit, insbesondere bezüglich einer senkrechten oder vertikalen Positionierung des Absaugstutzens. Ein solches Zubehörteil kann die Aufgabe auch eigenständig lösen.
Es ist eine Weiterbildung, dass der Absaugstutzen elastisch verformbar ist. So kann der Absaugstutzen einfach über einen, insbesondere im Wesentlichen steifen, Absauganschluss geschoben oder gesteckt werden und durch eine elastische Rückfederung für einen zur Aufrechterhaltung des Unterdrucks ausreichend dichten Sitz sorgen.
Es ist für eine einfache Beschickung vorteilhaft, wenn das Zubehörteil als ein Zubehörunterteil zum Einschub in eine Einschubebene eines Ofens ausgebildet ist. Das Zubehörunterteil kann z.B. als ein Gargutträger in Form eines Backblechs ausgestaltet sein.
Das Zubehörunterteil kann insbesondere als ein Gargutträger, z.B. in Form eines Backblechs, mit einem Aufnahmebereich für Gargut, z.B. einer Vertiefung ausgestaltet sein, wobei der Aufnahmebereich für das Gargut umlaufend von einer Unterdruckdichtung umgeben ist. Das Zubehöroberteil kann dann insbesondere als ein Deckel ausgestaltet sein. Alternativ kann das Zubehörunterteil nicht als ein Gargutträger vorgesehen sein, während das Zubehöroberteil als ein Gargutträger vorgesehen ist, z.B. durch eine Verwendung eines Gargutträgereinsatzes. Insbesondere falls das Zubehörunterteil nicht als ein Gargutträger vorgesehen ist, kann es ein Wärmeerzeugungselement aufweisen.

Es ist noch eine Weiterbildung, dass das Zubehöroberteil für eine wärmeerzeugende Strahlung im Wesentlichen durchlässig ist. So kann eine Wärmeeinwirkung für ein unter dem Zubehöroberteil befindliches Gargut effektiv von Außen zugeführt werden, z.B. über Heizkörper des Ofens. So kann das Zubehöroberteil, insbesondere Deckel, für eine Wärmestrahlung oder IR-Strahlung im Wesentlichen durchlässig sein, um z.B. von einer IR-Strahlungsquelle des Ofens, wie einer Widerstandsheizung, erzeugte Infrarotstrahlung zu dem Gargut durchzulassen. Das Zubehöroberteil kann zusätzlich oder alternativ für eine andere an dem Gargut Wärme erzeugende Strahlung im Wesentlichen durchlässig sein, z.B. für sichtbares Licht, das beispielsweise von einer Blitzlampe des Ofens erzeugt wird. Das Zubehöroberteil kann insbesondere aus einem transparenten Material, insbesondere Glas bestehen, oder das transparente Material aufweisen (z.B. ein oder mehrere Glasfenster).

Das Zubehöroberteil kann aber auch für eine wärmeerzeugende Strahlung im Wesentlichen undurchlässig sein, insbesondere falls die Wärmeübertragung im Wesentlichen nur über das Zubehörunterteil, auf dem das Zubehöroberteil aufliegt, geschieht oder falls das Zubehörunterteil, auf dem das Zubehöroberteil aufliegt, selbst mindestens ein Wärmeerzeugungselement, insbesondere Wärmestrahlungsquelle, aufweist, z.B. innerhalb des Behandlungsraums. Es ist eine Weiterbildung, dass in das Zubehörteil (insbesondere in das Zubehöroberteil und/oder in das Zubehörunterteil) mindestens ein Wärmeerzeugungselement integriert ist. So kann das Zubehöroberteil ein Wärmeerzeugungselement aufweisen, insbesondere, falls es auch als ein Gargutträger eingerichtet ist.

Allgemein kann eine elektrische (Steck-)Verbindung zumindest an einem der Zubehörteile vorhanden sein, welche an eine in den Ofenraum ragende elektrische Gegen(steck)verbindung anschließbar, insbesondere ansteckbar ist, um das mindestens eine Wärmeerzeugungselement mit einer Stromquelle zu verbinden. Jedoch ist die elektrische Verbindung nicht auf eine Steckverbindung beschränkt, sondern kann z.B. auch eine Kabelverbindung usw. sein. Die Steckverbindung weist den Vorteil auf, dass sie mit dem gleichen Bewegungsablauf verbunden werden kann wie die Unterdruckverbindung, z.B. durch ein Einschieben des Ofenzubehörs oder ein Schließen der Ofentür.

Die zwei Zubehörteile können insbesondere ein Zubehörunterteil und ein auf das Zubehörunterteil aufsetzbares Zubehöroberteil aufweisen, insbesondere wie oben beschrieben.

Die Zubehörteile sind miteinander unterdruckdicht verschließbar oder verbindbar. Das Ofenzubehör oder die Kombination aus den Zubehörteilen bildet bzw. bilden einen evakuierbaren Hohlraum zur Aufnahme von Gargut (Behandlungsraum) oder einen solchen Behälter. So lässt sich ein einfach herstellbares und mit Gargut belegbares Ofenzubehör bereitstellen. Das Ofenzubehör kann insbesondere als ein zum Einsatz in einem Garraum eines Ofens vorgesehenes Ofenzubehör oder (Gesamt-)Zubehörteil verstanden werden.

Die Wärmezufuhr auf das Gargut, insbesondere Backgut, kann insbesondere durch eine Wärmeleitung erfolgen, und zwar insbesondere an den Stellen, an denen das Gargut direkt das Ofenzubehör, insbesondere das als Gargutträger ausgebildete Zubehörunterteil, oder sich in dem Ofenzubehör befindliche Elemente, wie einen Gargutträgereinsatz, kontaktiert. In Bereichen, in denen das Gargut dem Unterdruck ausgesetzt ist, mag eine Wärmeübertragung auf das Gargut mittels einer Wärmestrahlung erfolgen, insbesondere durch den Deckel, z.B. wie oben beschrieben.

Es ist ferner eine Weiterbildung, dass das Ofenzubehör selbst keine Wärmequelle oder kein Wärmeerzeugungselement aufweist. Dies ermöglicht eine besonders einfache und preiswerte Ausgestaltung.

Es ist eine alternative Weiterbildung, dass das Ofenzubehör mindestens ein Wärmeerzeugungselement, insbesondere Wärmestrahlungsquelle, aufweist. Liegt das Wärmeerzeugungselement innerhalb des Ofenzubehörs, kann das Ofenzubehör wärmestrahlungsdicht sein. Das mindestens eine Wärmeerzeugungselement kann an insbesondere einem Zubehörunterteil und/oder einem Zubehöroberteil angeordnet sein. Eine solche Ausgestaltung kann besonders gut auf ein bestimmtes Gargut, z.B. Backgut, angepasst werden. So mag ein oberhalb des Backguts vorhandenes Wärmeerzeugungselement insbesondere auf eine ausreichende Bräunung des Backguts abgestimmt sein.

Die Aufgabe wird darüber hinaus gelöst durch ein Verfahren zum Behandeln, insbesondere Wärmebehandeln, von Gargut in einem Ofen des obigen Systems, wobei das Gargut zumindest zeitweise unter einem vorbestimmten Unterdruck in dem Ofen behandelt wird.

Das Gargut kann insbesondere ein Gargut sein und die Wärmebehandlung ein Backen oder ein Backvorgang.

Auch hierdurch lassen sich ohne Triebmittel oder mit stark reduzierter Zugabe von Triebmittel gleich gute oder sogar bessere Backergebnisse insbesondere bezüglich einer Lockerheit und Luftigkeit erzielen, und es lassen sich insbesondere Gebäcke mit noch luftigerer und lockerer Krume erzeugen als ohne ein Unterdruckbacken, ggf. mit großvolumigeren Lufteinschlüssen.

Es ist eine Ausgestaltung, dass das Verfahren mindestens die folgenden Schritte umfasst:
- Einbringen von Gargut, insbesondere Backgut, in das unterdruckdichte Ofenzubehör,
- Beschicken des Garraums des Ofens mit dem Ofenzubehör und dadurch steckendes Verbinden des Absaugstutzen des Zubehörteils mit dem Absauganschluss des Ofens,
- Anschließen des Ofenzubehörs an den Absauganschluss des Ofens,
- zumindest zeitweises Erzeugen eines Unterdrucks in dem unterdruckdichten Ofenzubehör, insbesondere während eines Betriebs des Ofens.

Der Ofen und das Ofenzubehör sind wie oben beschrieben ausgestaltet. Der Schritt des Beschickens des Garraums mit dem Ofenzubehör umfasst ein Einschieben des Ofenzubehörs in einen Einschub oder eine Einschubebene des Garraums. Das Anschließen des Ofenzubehörs an den Absauganschluss des Ofens umfasst ein Aufstecken eines Deckels des Ofenzubehörs auf den Absauganschluss im Rahmen einer Einschubbewegung des Ofenzubehörs in den Garraum. Der Schritt des Erzeugens eines Unterdrucks kann somit in jeder beliebigen Phase eines Ofenbetriebs durchgeführt werden. So kann der Unterdruck vor einer Heizphase, z.B. während einer unbeheizten Unterdruckphase, während einer Aufwärmphase der Heizphase oder während einer Wärmebehandlungsphase der Heizphase erzeugt werden. Der Unterdruck kann sogar nach einer Heizphase erzeugt werden, z.B. für eine Nachbehandlung eines noch warmen Garguts.

In den folgenden Figuren wird die Erfindung anhand von Ausführungsbeispielen schematisch genauer beschrieben. Dabei können zur Übersichtlichkeit gleiche oder gleichwirkende Elemente mit gleichen Bezugszeichen versehen sein.
- Fig.1: skizziert als Schnittdarstellung in Seitenansicht einen Garraum eines Backofens mit einem darin eingesetzten evakuierbaren oder unterdruckfähigen Ofenzubehör;
- Fig.2: zeigt einen möglichen Prozessablauf zum Unterdruck-Wärmebehandeln von Gargut mit der Anordnung aus Fig.1;
- Fig.3: zeigt in einer Ansicht von schräg vorne den Backofen mit dem eingesetzten Ofenzubehör gemäß Fig.1 in einer konstruktiven Darstellung;
- Fig.4: zeigt das unterdruckfähige Ofenzubehör aus Fig.3 in einer Ansicht von schräg vorne und oben mit einem auf ein Zubehörunterteil aufgesetzten Zubehöroberteil;
- Fig.5: zeigt das Ofenzubehör aus Fig.4 in einer Ansicht von schräg vorne und oben mit dem Zubehöroberteil von dem Zubehörunterteil abgehoben;
- Fig.6: zeigt das Ofenzubehör aus Fig.4 in einer Ansicht von schräg hinten und oben; und
- Fig.7: zeigt als Schnittdarstellung in einer Ansicht von schräg hinten den Backofen aus Fig.3.

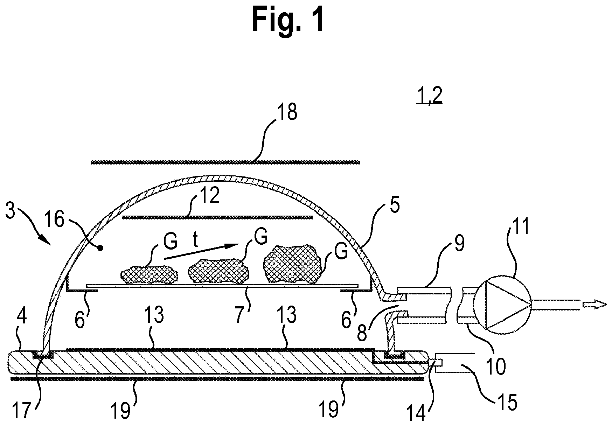

**Fig.1** zeigt einen Garraum 2 eines Gargeräts oder Ofens in Form eines Backofens 1, in welchem sich ein Ofenzubehör 3 befindet. Das Ofenzubehör 3 kann beispielsweise in eine Einschubebene des Garraums 2 eingeschoben worden sein, z.B. in dieser Darstellung von links nach rechts.

Das Ofenzubehör 3 weist zwei Zubehörteile 4, 5 auf, nämlich ein Zubehörunterteil 4, auf welches von oben ein Zubehöroberteil 5 unterdruckdicht aufgesetzt ist. Das Zubehöroberteil 5 ist von dem Zubehörunterteil 4 abnehmbar. Das Zubehöroberteil 5 weist eine Halterung 6 zum Haltern eines herausnehmbaren Gargutträgereinsatzes 7 auf, so dass der Gargutträgereinsatz 7 sowohl gegenüber dem Zubehörunterteil 4 als auch einem oberen Bereich des Zubehöroberteils 5 einen Abstand aufweist. Das Zubehöroberteil 5 ist mit einem seitlich angebrachten Absaugstutzen 8 versehen, welcher auf einen passenden Absauganschluss 9 des Backofens 1 unterdruckdicht aufsteckbar ist. Der Absauganschluss 9 ist im Wesentlichen steif und in dem Garraum stationär angeordnet, während der Absaugstutzen 8 aus einem elastischen Material besteht, insbesondere Silikon. So kann eine gute Rückfederung des Absaugstutzens 8 und damit Unterdruckdichtigkeit, auch gegenüber dem restlichen Zubehöroberteil 5, erreicht werden. Zudem erleichtert die elastische Ausgestaltung des Absaugstutzens 8 ein einfaches Aufsetzen auf den Absauganschluss 9. Der Absauganschluss 9 ist über eine Absaugleitung 10 mit einer Vakuumpumpe oder Unterdruckpumpe 11 des Backofens 1 verbunden.

Alternativ können der Absaugstutzen 8 oder ein anderer Unterdruckkanal auch in dem Zubehörunterteil 4 vorhanden sein, z.B. senkrecht durch das Zubehörunterteil 4 verlaufend.

Das Ofenzubehör 3 kann einen oder mehrere Wärmeerzeugungselemente 12, 13 aufweisen, wobei hier ein oberes Wärmeerzeugungselement 12 oberhalb des Gargutträgereinsatzes 7 an dem Zubehöroberteil 5 angebracht ist. Ein unteres Wärmeerzeugungselement 13 ist an einer dem Zubehöroberteil 5 zugewandten Oberseite des Zubehörunterteils 4 unterhalb des Gargutträgereinsatzes 7 angeordnet. Die Wärmeerzeugungselemente 12, 13 können beide über geeignete elektrische Verbindungen mit einer Stromquelle des Ofens 1 verbunden sein, beispielsweise wie hier gezeigt durch eine elektrische Steckverbindung 14, 15, bei welcher ein elektrischer Anschlussstecker 14, welcher seitlich aus dem Zubehörunterteil 4 ragt, in eine passende elektrische Anschlussbuchse 15 des Backofens 1 mittels einer Einschubbewegung des Ofenzubehörs 3 in den Garraum 2 einsteckbar ist. Insgesamt können durch eine Einschubbewegung des Ofenzubehörs 3 sowohl die Unterdruckverbindung 8, 9 als auch die elektrische Verbindung 14, 15 mit dem Backofen 1 hergestellt werden.

Durch die Verwendung der Wärmeerzeugungselemente 12, 13 innerhalb des Ofenzubehörs, genauer gesagt innerhalb eines durch das Ofenzubehör 3 erzeugten unterdruckfähigen Behandlungsraums 16, kann insbesondere eine ausreichende Wärmemenge, insbesondere in Form von Wärmestrahlung, an dem wärmezubehandelnden Gargut G bereitgestellt werden. Das Gargut G wird auf den Gargutträgereinsatz 7 aufgelegt und dann mit diesem in das Zubehöroberteil 5 eingesetzt. Nach dem Einsetzen kann das Zubehöroberteil 5 auf das Zubehörunterteil 4 aufgesetzt werden, insbesondere auf eine im Wesentlichen unterdruckfeste Dichtung 17 des Zubehörunterteils 4.

Durch die "schwebende" Positionierung des Gargutträgereinsatzes 7 kann ein ausreichender Abstand des Garguts G zu den Wärmeerzeugungselementen 12, 13 eingehalten werden. Falls das Gargut G ein Backgut ist, kann insbesondere durch das obere Wärmeerzeugungselement 12 ein ausreichender Bräunungsgrad des Garguts erreicht werden. Die Art der Wärmeerzeugungselemente 12, 13 kann auf eine bestimmte Art von Gargut G abgestimmt sein, z.B. zur besonders vorteilhaften Wärmebehandlung von Backgut.

In einer alternativen Ausgestaltung mag das Ofenzubehör 3 selbst kein Wärmeerzeugungselement 12, 13 aufweisen. Vielmehr können die Wärmeerzeugungselemente 18, 19 des Backofens 1 genutzt werden, hier beispielsweise ein Oberhitzeheizkörper 18 und ein Unterhitzeheizkörper 19. Insbesondere dann kann auf eine Verwendung der Halterung 6 und des separaten Gargutträgereinsatzes 7 verzichtet werden, und das Zubehörunterteil 4 kann gleichzeitig als ein Gargutträger dienen, beispielsweise in Form eines Backblechs mit der umlaufenden Unterdruckdichtung 17. Das Zubehöroberteil 5 kann dann als ein einfacher Deckel ausgestaltet sein, welcher zum Durchlassen von Wärmestrahlung insbesondere des Oberhitzeheizkörpers 18 vorzugsweise zumindest infrarotdurchlässig, ggf. auch lichtdurchlässig, ausgestaltet ist. Eine Ausgestaltung des Zubehöroberteils 5 aus einem lichtdurchlässigen, insbesondere transparenten, Material, vorzugsweise Glas, ermöglicht zudem eine Sichtung des Garguts G durch einen Benutzer ohne Öffnen des Ofenzubehörs 3. Demgegenüber kann bei der oben beschriebenen Ausgestaltung mit den Wärmeerzeugungselementen 12, 13 der Deckel vorzugsweise auch wärmeisolierend ausgestaltet sein.

Bei einem Betrieb des Ofenzubehörs 3 befindet sich dieses in dem Garraum 2 und ist zumindest an den Absauganschluss 9 des Backofens 1 angeschlossen. Das Ofenzubehör 3 ist mit dem Gargut G bestückt und wird mittels der Wärmeerzeugungselemente 12, 13 oder 18, 19 erwärmt. Das Gargut G ist somit sowohl einer Wärme (durch Wärmestrahlung und/oder Wärmeleitung) ausgesetzt als auch mittels des Betriebs der Unterdruckpumpe 11 an nicht aufliegenden Stellen von einem Unterdruck pu umgeben. Der Unterdruck pu bewirkt, dass sich das Gargut G besser ausdehnen kann als unter Atmosphärendruck p0. Insbesondere bei einem Vorliegen von Backgut als dem Gargut G kann dieses unter dem Unterdruck pu über die Zeit t mindestens genauso gut, teilweise sogar besser, aufgehen als bei einer herkömmlichen Verwendung von Triebmitteln, wie durch den linienförmigen Pfeil angedeutet. Dadurch kann in dem Backgut auf Triebmittel verzichtet werden oder zumindest die Menge des Triebmittels erheblich verringert werden. Insbesondere lassen sich auch größere Lufteinschlüsse bei noch luftigerer und lockererer Kruste erreichen.

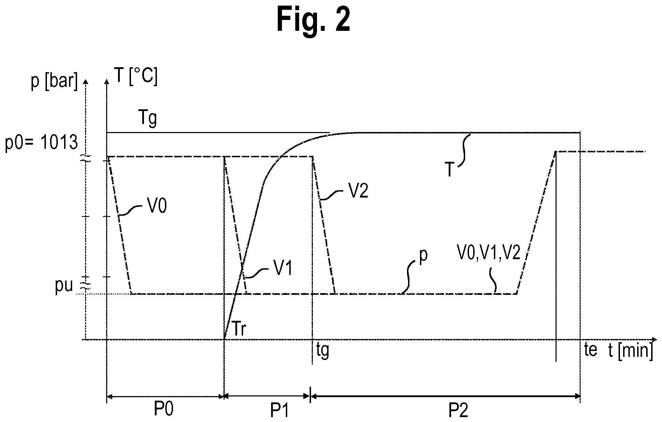

**Fig.2** zeigt mögliche Prozessabläufe einer Unterdruck-Wärmebehandlung, insbesondere wie sie mit der Anordnung 1, 3 aus Fig.1 durchgeführt werden kann. Dazu zeigt Fig.2 eine Auftragung eines Drucks p in dem Behandlungsraum 16 des Ofenzubehörs 3 gegen die Zeit t (gestrichelte Linie) und gleichzeitig eine Auftragung einer Temperatur T in dem Behandlungsraum 16 über die Zeit t (durchgezogene Linie). Zu Beginn eines Garablaufs, beispielsweise eines Backvorgangs, bei einem Anfangszeitpunkt t0 entspricht die Temperatur T in dem Behandlungsraum 16 ungefähr einer Raumtemperatur Tr und der Druck p in dem Behandlungsraum 16 entspricht ungefähr dem Atmosphärendruck p0 von ca. 1013 bar. In einer Vorheizphase P1, welche von dem Anfangszeitpunkt t0 bis zu einem Zeitpunkt tg zu Beginn einer Wärmebehandlungsphase in Form einer Garphase P2 dauert, wird der Behandlungsraum 16 durch eine entsprechende Betätigung der Wärmeerzeugungselemente 12, 13 oder 18, 19 auf eine gewünschte Solltemperatur Tg in dem Behandlungsraum 16 erwärmt.

Es ist eine Variante V1, dass bereits während einer Aufwärmphase P1 der Druck in dem Behandlungsraum 16 auf einen vorbestimmten Unterdruck pu eingestellt oder eingeregelt wird, und zwar durch eine entsprechende Aktivierung der Unterdruckpumpe 11. Mit Beginn der Garphase P2, welche von tg bis zum Garende te dauert, wird die Temperatur T in dem Behandlungsraum 16 im Wesentlichen auf der vorbestimmten Gartemperatur Tg gehalten.

Während in der ersten Variante V1 somit zum Beginn der Garphase P2 bereits der Unterdruck pu herrscht, mag in einer zweiten Variante V2 der Unterdruck pu erst zu Beginn der Garphase P2 hergestellt werden. Im Folgenden wird der Unterdruck pu während des größten Teils der Garphase P2 auf dem gewünschten Wert gehalten, z.B. darauf eingeregelt, und für beide Varianten erst kurz vor Ende der Garphase P2 auf den Atmosphärendruck p0 zurückgeführt. Der Druckabfall und/oder der Druckanstieg zwischen p0 und pu kann gezielt variiert werden, z.B. in Abhängigkeit von dem gewählten Gargut, oder mag alternativ nicht aktiv variierbar sein. Der Ofen kann mindestens ein Garprogramm für eine Wärmebehandlung unter dem Unterdruck pu aufweisen oder ablaufen lassen.

Es ist noch eine Variante V0, dass der Aufwärmphase P1 eine heizlose Unterdruckphase P0 vorangeht, während derer der Garraum nicht geheizt wird, aber der Behandlungsraum 16 bereits auf den Unterdruck pu evakuiert wird und für eine vorbestimmte Zeitdauer in dem heizlosen Unterdruckzustand gehalten wird. Dadurch kann z.B. Hefegebäck besonders vorteilhaft behandelt werden.

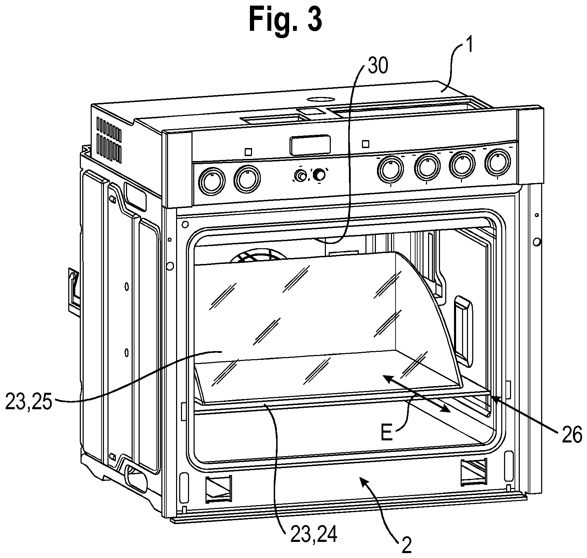

**Fig.3** zeigt in Schrägansicht von vorne eine mögliche konkrete Ausgestaltung des Backofens 1 und eines Ofenzubehörs 23. Der Backofen 1 ist ohne sein äußeres Gehäuse und ohne seine Backofentür gezeigt. In eine Einschubebene 26 des Garraums 2 ist das Ofenzubehör 23 in den Garraum 2 bis zum Anschlag nach hinten entlang der durch den Doppelpfeil angedeuteten Einschubrichtung eingeführt worden. In der gezeigten Ausführungsform weist das Ofenzubehör 23 selbst keine Wärmeerzeugungselemente auf. Das Zubehörunterteil 24 ist in Form eines Backblechs ausgeführt, auf welches ein als zumindest teilweise transparentes Zubehöroberteil 25 ein Deckel aus Glas aufgesetzt ist.

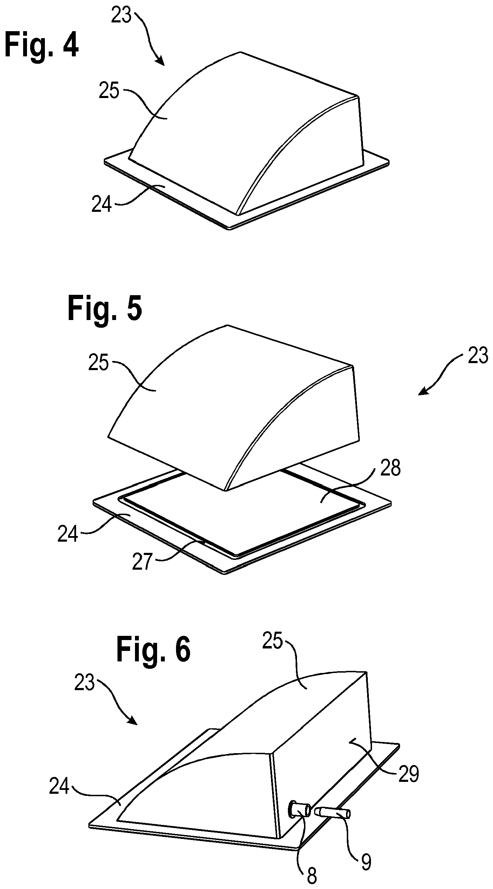

**Fig.4** zeigt in einer Ansicht von schräg vorne und oben das Ofenzubehör 23 mit dem unterdruckdicht auf das Zubehörunterteil 24 aufgesetzten Zubehöroberteil 25. Das Zubehöroberteil 25 weist eine nach vorne (bei einem Einsatz in den Garraum 2 in Richtung der Beschickungsöffnung) zulaufende Form auf.

**Fig.5** zeigt in einer zu Fig.4 analogen Ansicht das Ofenzubehör 23, wobei nun das Zubehöroberteil 25 von dem Zubehörunterteil 24 abgenommen ist. Das Zubehörunterteil 24 weist eine Auflagefläche 28 zur Auflage von Gargut auf, welche insbesondere leicht vertieft sein kann. Um die Auflagefläche 28 herum läuft durchgehend die Unterdruckdichtung 27. Die Unterdruckdichtung 27 kann beispielsweise mittels einer nach unten ausgeformten Rille, Nut oder Vertiefung gebildet werden, welche für eine verbesserte Unterdruckdichtigkeit insbesondere mit einem vorzugsweise elastischen Dichtmaterial zumindest teilweise gefüllt sein kann. Das Dichtmaterial kann insbesondere Silikon sein und beispielsweise in Form eines Silikondichtelements vorliegen. Zum Bestücken des Ofenzubehörs 23 mit Gargut braucht somit das Gargut lediglich auf die Auflagefläche 28 gelegt und danach das Zubehöroberteil 25 auf die Unterdruckdichtung 27 aufgesetzt werden.

**Fig.6** zeigt in Ansicht von schräg oben einen rückwärtigen Bereich des Ofenzubehörs 23 mit einer Rückwand 29 des Zubehöroberteils 25. In die Rückwand 29 ist der Absaugstutzen 8 waagerecht herausstehend eingebracht. Der Absaugstutzen 8 ist auch in dieser Ausführungsform so ausgebildet und angeordnet, dass er bei dem Einschub in eine geeignete Einschubebene 26 des Garraums 2 auf den Absauganschluss 9 des Ofens 1, welcher auf gleicher Höhe und seitlichen Position waagerecht aus der Rückwand 30 des Garraums 2 hervorsteht, unterdruckdicht aufsteckbar ist.

Falls das Ofenzubehör 23 elektrisch versorgt werden soll, beispielsweise falls es ein Wärmeerzeugungselement aufweist, kann das Ofenzubehör 23 auch einen Teil einer elektrischen Anschlussverbindung aufweisen, welche beispielsweise auf eine grundsätzlich gleiche Art auf den komplementären elektrischen Anschlussteil des Ofens 1 aufsteckbar ist wie in Fig.1 skizziert.

Mit dem Evakuieren des Behandlungsraums 16 des Ofenzubehörs 23 wird das Zubehöroberteil 25 noch stärker auf das Zubehörunterteil 24 gepresst, so dass eine noch weiter verbesserte Unterdruckdichtigkeit erreicht wird.

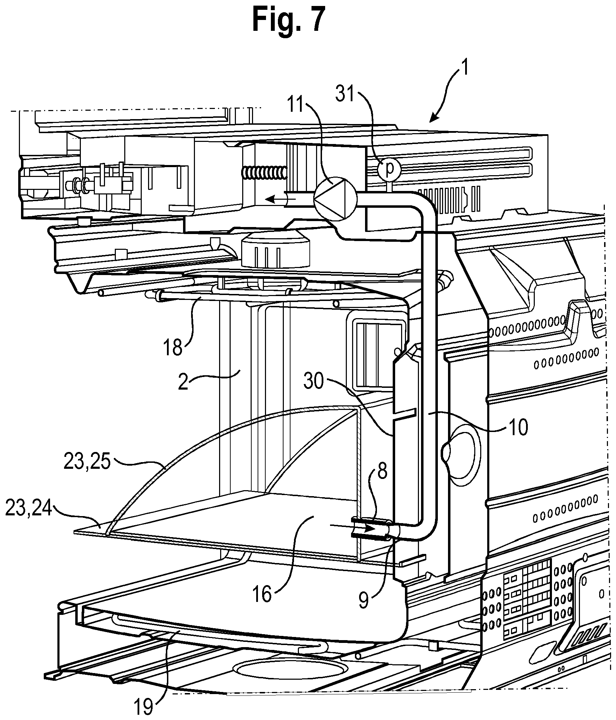

**Fig.7** zeigt als Schnittdarstellung in einer Ansicht von schräg hinten den Ofen 1 mit dem in seinen Garraum 2 eingesetzten Ofenzubehör 23. Der Absauganschluss 9 ist über die Absaugleitung 10 mit der Unterdruckpumpe 11 verbunden. Bei einem Betrieb der Unterdruckpumpe 11 wird somit der Behandlungsraum 16 evakuiert. Zum Einstellen und Halten eines vorbestimmten Unterdrucks pu in dem Behandlungsraum 16 weist der Backofen 1 einen in den Unterdruckbereich integrierten Drucksensor 31 auf, welcher hier an der Absaugleitung 10 angeschlossen ist. Dies weist den Vorteil auf, dass der Drucksensor 31 unabhängig von der Unterdruckpumpe 11 und dem Absauganschluss 9 montiert werden kann. Die Unterdruckpumpe 11 und der Drucksensor 31 sind funktional an ein (nicht dargestelltes) Steuergerät angeschlossen, welches die von dem Drucksensor 31 gelieferten Sensordaten auswerten und für eine Einstellung der Unterdruckpumpe 11 nutzen kann. So kann ein Regelkreis gebildet werden, welcher den Unterdruck pu in dem Behandlungsraum 16 auf einen gewünschten Wert einregeln kann. Die Zubehörteile des Ofenzubehörs sind allgemein nicht darauf beschränkt, ein Zubehöroberteil und ein Zubehörunterteil aufzuweisen, sondern können beispielsweise auch zwei (oder mehr) seitlich aufeinandersetzbare Zubehörteile umfassen.
Auch können der Unterdruckanschluss und ggf. ein elektrischer Steckanschluss in der Ofentür vorhanden sein, und zwar zusätzlich oder alternativ zu beispielsweise der Rückwand. Das Ofenzubehör kann dann speziell auf den Anschluss oder die Anschlüsse in der Ofentür angepasst sein oder einfach umgekehrt zu der rückwändigen Anschlussmöglichkeit in den Garraum eingesetzt werden.
Allgemein kann der Ofen ein Backofen (als Einzelgerät oder Teil eines Herds), ein Mikrowellenofen, ein Dampfgarer und/oder ein anderes Gargerät sein.

### Bezuaszeichenliste

- 1: Backofen
- 2: Garraum
- 3: Ofenzubehör
- 4: Zubehörunterteil
- 5: Zubehöroberteil
- 6: Halterung
- 7: Gargutträgereinsatz
- 8: Absaugstutzen
- 9: Absauganschluss
- 10: Absaugleitung
- 11: Vakuumpumpe
- 12: Wärmeerzeugungselement
- 13: Wärmeerzeugungselement
- 14: Anschlussstecker
- 15: Anschlussbuchse
- 16: Behandlungsraum
- 17: Unterdruckdichtung
- 18: Wärmeerzeugungselement
- 19: Wärmeerzeugungselement
- 23: Ofenzubehör
- 24: Zubehörunterteil
- 25: Zubehöroberteil
- 26: Einschubebene
- 27: Unterdruckdichtung
- 28: Auflagefläche
- 29: Rückwand des Zubehöroberteils
- 30: Rückwand des Garraums
- 31: Drucksensor
- G: Gargut
- T: Temperatur
- Tr: Raumtemperatur
- Tg: Solltemperatur
- t: Zeit
- p: Druck
- p0: Atmosphärendruck
- pu: Unterdruck
- t0: Anfangszeit
- tg: Beginn einer Garphase
- te: Garende
- P0: heizlose Unterdruckphase
- P1: Aufwärmphase
- P2: Garphase
- V0: weitere Variante
- V1: erste Variante
- V2: zweite Variante

## Patentansprüche

1. System (1, 3; 23) mit einem Ofen (1) und mit einem Ofenzubehör (3; 23), wobei
- der Ofen (1) einen Garraum (2) mit einer Rückwand (30) aufweist,
- der Ofen (1) mindestens eine Unterdruckpumpe (11) und mindestens einen an die Unterdruckpumpe (11) angeschlossenen, in den Garraum (2) ragenden Absauganschluss (9) aufweist,
- das Ofenzubehör (3; 23) mindestens zwei Zubehörteile (4, 5; 24, 25), die miteinander unterdruckdicht verschließbar sind, aufweist,
- eines der Zubehörteile (4, 5; 24, 25) einen Absaugstutzen (8) aufweist,
**dadurch gekennzeichnet, dass**
- der Absauganschluss (9) durch die Rückwand (30) ragt und zum unterdruckdichten Aufstecken des Absaugstutzens (8) mittels einer Einschubbewegung des Ofenzubehörs (3; 23) ausgestaltet ist und
- der Absaugstutzen (8) so an einer Rückseite des Zubehörteils (4, 5; 24, 25) angeordnet ist, dass
- der Absaugstutzen (8) des Zubehörteils (4, 5; 24, 25) bei einer Beschickung des Garraums (2) des Ofens (1) mit dem Ofenzubehör (3; 23) mittels einer Beschickungsbewegung im Wesentlichen unterdruckdicht auf den mindestens einen Absauganschluss (9) des Ofens (1) aufsteckbar ist.

2. System (1, 3; 23) nach Anspruch 1, **dadurch gekennzeichnet, dass** der mindestens eine Absauganschluss (9) als ein senkrecht in den Garraum (2) ragendes, zumindest im Garraum (2) im Wesentlichen steifes Element ausgestaltet ist.

3. System (1, 3; 23) nach einem der vorhergehenden Ansprüche, **dadurch gekennzeichnet, dass** der Ofen (1) einen Drucksensor (31) in oder an einer die Unterdruckpumpe (11) mit dem Absauganschluss (9) verbindenden Absaugleitung (10) aufweist, wobei der Drucksensor (31) und die Unterdruckpumpe (11) zum Einregeln eines Unterdrucks (pu) auf einen Sollwert mit einer Steuereinheit verbunden sind.

4. System (1, 3; 23) nach Anspruch 3, **dadurch gekennzeichnet, dass** ein absoluter Wert des Unterdrucks (pu) und dessen Änderung mittels eines Garprogramms einstellbar ist.

5. System (1, 3; 23) nach einem der vorhergehenden Ansprüche, **dadurch gekennzeichnet, dass** der Ofen (1) zur Erzeugung eines Unterdrucks (pu) während einer Heizphase (P1, P2) eingerichtet ist.

6. System (1, 3; 23) nach einem der vorhergehenden Ansprüche, **dadurch gekennzeichnet, dass** der Ofen (1) eine elektrische Anschlussbuchse (15) aufweist, in die mittels der gleichen Einschubbewegung wie zum Aufstecken des Absaugstutzens (8) ein elektrischer Anschlussstecker (14) des Ofenzubehörs (3) einsteckbar ist und das Ofenzubehör (3) mehrere elektrische Wärmestrahlungsquellen (12, 13) und einen elektrischen Anschlussstecker (14) aufweist, welcher Anschlussstecker (14) an eine Anschlussbuchse (15) des Ofens ansteckbar ist, um die Wärmestrahlungsquellen (12, 13) mit einer Stromquelle des Ofens (1) zu verbinden.

7. System (1, 3; 23) nach Anspruch 6, **dadurch gekennzeichnet, dass** der Absaugstutzen (8) elastisch verformbar ist.

8. Verfahren zum Behandeln von Gargut (G) in einem Ofen (1) eines Systems (1, 3; 23) nach einem der vorhergehenden Ansprüche, wobei das Gargut (G) in dem Ofen (1) zumindest zeitweise unter einem vorbestimmten Unterdruck (pu) behandelt wird, **dadurch gekennzeichnet, dass** das Verfahren mindestens die folgenden Schritte umfasst:
- Einbringen von Gargut (G) in das unterdruckdichte Ofenzubehör (3; 23),
- Beschicken des Garraums (2) des Ofens (1) mit dem Ofenzubehör (3; 23) und dadurch steckendes Verbinden des Absaugstutzen (8) des Zubehörteils (4, 5; 24, 25) mit dem Absauganschluss (9) des Ofens (1) und
- zumindest zeitweises Erzeugen eines Unterdrucks (pu) in dem unterdruckdichten Ofenzubehör (3; 23) während einer Heizphase (P1, P2) des Ofens (1).

9. Verfahren nach Anspruch 8, **dadurch gekennzeichnet, dass** ein absoluter Wert des Unterdrucks (pu) und dessen Änderung über die Zeit abhängig von einer Einstellung einer Speise oder Speisenkategorie durchgeführt wird.

## Claims

1. System (1, 3; 23) having an oven (1) and having an oven accessory (3; 23), wherein
- the oven (1) has a cooking compartment (2) with a rear wall (30),
- the oven (1) has at least one negative-pressure pump (11) and at least one suction connection (9) connected to the negative-pressure pump (11) and projecting into the cooking compartment (2),
- the oven accessory (3; 23) has at least two accessory parts (4, 5; 24, 25) that can be sealed to one another in a vacuum-tight manner,
- one of the accessory parts (4, 5; 24, 25) has a suction socket (8),
**characterised in that**
- the suction connection (9) projects through the rear wall (30) and is designed to be plugged onto the suction socket (8) in a vacuum-tight manner by means of an insertion movement of the oven accessory (3; 23) and
- the suction socket (8) is arranged on a rear side of the accessory part (4, 5; 24, 25) such that
- when the cooking compartment (2) of the oven (1) is loaded using the oven accessory (3, 23), by means of a sliding-in movement, the suction socket (8) of the accessory part (4, 5; 24, 25) can be plugged in an essentially vacuum-tight manner onto the at least one suction connection (9) of the oven (1).

2. System (1, 3; 23) according to claim 1, **characterised in that** the at least one suction connection (9) is designed as an element that projects vertically into the cooking compartment (2) and is essentially stiff at least in the cooking compartment (2).

3. System (1, 3; 23) according to one of the preceding claims, **characterised in that** the oven (1) has a pressure sensor (31) in or on a suction hose (10) connecting the negative-pressure pump (11) to the suction connection (9), wherein the pressure sensor (31) and the negative-pressure pump (11) are connected to a control unit for adjusting a negative pressure (pu) to a setpoint value.

4. System (1, 3; 23) according to claim 3, **characterised in that** an absolute negative pressure (pu) value and the change therein can be set by means of a cooking program.

5. System (1, 3; 23) according to one of the preceding claims, **characterised in that** the oven (1) is configured to generate a negative pressure (pu) during a heating phase (PI, P2).

6. System (1, 3; 23) according to one of the preceding claims, **characterised in that** the oven (1) has a female electrical connector (15) into which, by means of the same sliding-in movement as for plugging on the suction socket (8), an electrical connector plug (14) of the oven accessory (3) can be plugged in, and the oven accessory (3) has a plurality of electrical heat radiation sources (12, 13), and an electrical connector plug (14) that can be connected to a female electrical connector (15) of the oven in order to connect the heat radiation sources (12, 13) to a current source of the oven (1).

7. System (1, 3; 23) according to claim 6, **characterised in that** the suction socket (8) is elastically deformable.

8. Method for treating food (G) in an oven (1) of a system (1, 3; 23) according to one of the preceding claims, wherein the food (G) is treated in the oven (1) at least at times under a predetermined negative pressure (pu), **characterised in that** the method comprises at least the following steps:
- Introducing food (G) into the vacuum-tight oven accessory (3; 23),
- Loading the cooking compartment (2) of the oven (1) using the oven accessory (3, 23) and thereby plugging the suction socket (8) of the accessory part (4, 5; 24, 25) onto the suction connection (9) of the oven (1), and
- Generating a negative pressure (pu) in the vacuum-tight oven accessory (3; 23) at least at times during a heating phase (P1, P2) of the oven (1).

9. Method according to claim 8, **characterised in that** an absolute negative pressure (pu) value and the change therein over time can be applied as a function of a setting for a foodstuff or food category.

## Revendications

1. Système (1, 3 ; 23) comprenant un four (1) et un accessoire de four (3 ; 23),
- le four (1) présentant un espace de cuisson (2) muni d'une paroi arrière (30),
- le four (1) présentant une pompe à vide (11) et au moins un raccord d'aspiration (9) raccordé à la pompe à vide (11), faisant saillie dans l'espace de cuisson (2),
- l'accessoire de four (3 ; 23) présentant au moins deux pièces d'accessoire (4, 5 ; 24, 25) qui peuvent être fermées entre elles de manière étanche au vide,
- une des pièces d'accessoire (4, 5 ; 24, 25) présentant un embout d'aspiration (8),
**caractérisé en ce que**
- le raccord d'aspiration (9) passe à travers la paroi arrière (30) et **en ce qu'**il est conçu pour l'emboîtement étanche au vide de l'embout d'aspiration (8) au moyen d'un mouvement d'enfoncement de l'accessoire de four (3 ; 23), et
- **en ce que** l'embout d'aspiration (8) est disposé sur un côté arrière de la pièce d'accessoire (4, 5 ; 24, 25) de manière à ce que
- l'embout d'aspiration (8) de la pièce d'accessoire (4, 5 ; 24, 25), lors d'un chargement de l'espace de cuisson (2) du four (1) avec l'accessoire de four (3 ; 23), puisse être emboîté sur l'au moins un raccord d'aspiration (9) du four (1) au moyen d'un mouvement de chargement essentiellement étanche au vide.

2. Système (1, 3 ; 23) selon la revendication 1, **caractérisé en ce que** l'au moins un raccord d'aspiration (9) est conçu comme un élément essentiellement rigide au moins dans l'espace de cuisson (2), faisant verticalement saillie dans l'espace de cuisson (2).

3. Système (1, 3 ; 23) selon l'une quelconque des revendications précédentes, **caractérisé en ce que** le four (1) présente un capteur de pression (31) disposé dans ou sur une conduite d'aspiration (10) reliant la pompe à vide (11) au raccord d'aspiration (9), le capteur de pression (31) et la pompe à vide (11) étant reliés à une unité de réglage pour le réglage d'une dépression (pu) sur une valeur théorique.

4. Système (1, 3 ; 23) selon la revendication 3, **caractérisé en ce qu'**une valeur absolue de la dépression (pu) et sa modification sont réglables au moyen d'un programme de cuisson.

5. Système (1, 3 ; 23) selon l'une quelconque des revendications précédentes, **caractérisé en ce que** le four (1) est conçu pour générer une dépression (pu) pendant une phase de chauffage (P1, P2).

6. Système (1, 3 ; 23) selon l'une quelconque des revendications précédentes, **caractérisé en ce que** le four (1) présente une prise de raccordement (15) électrique dans laquelle une fiche de raccordement électrique (14) de l'accessoire de four (3) est enfichable au moyen du même mouvement d'enfoncement que celui destiné à emboîter l'embout d'aspiration (8), et **en ce que** l'accessoire de four (3) présente plusieurs sources électriques de chaleur rayonnante (12, 13) et une fiche de raccordement électrique (14), laquelle peut être emboîtée sur une prise de raccordement (15) du four afin de relier les sources de chaleur rayonnante (12, 13) à une source de courant du four (1).

7. Système (1, 3 ; 23) selon la revendication 6, **caractérisé en ce que** l'embout d'aspiration (8) est élastiquement déformable.

8. Procédé de traitement d'aliments à cuire (G) dans un four (1) d'un système (1, 3 ; 23) selon l'une quelconque des revendications précédentes, les aliments à cuire (G) étant traités dans le four (1) au moins temporairement sous une dépression (pu) déterminée, **caractérisé en ce que** le procédé comprend au moins les étapes suivantes :
- introduction des aliments à cuire (G) dans l'accessoire de four (3 ; 23) étanche au vide,
- chargement de l'espace de cuisson (2) du four (1) avec l'accessoire de four (3 ; 23) et, donc, liaison par emboîtement de l'embout d'aspiration (8) de la pièce d'accessoire (4, 5 ; 24, 25) au raccord d'aspiration (9) du four (1), et
- génération, au moins temporairement, d'une dépression (pu) dans l'accessoire de four (3 ; 23) étanche au vide pendant une phase de chauffage (P1, P2) du four (1).

9. Procédé selon la revendication 8, **caractérisé en ce qu'**une valeur absolue de la dépression (pu) et sa modification sont réalisées dans le temps en fonction d'un réglage d'un aliment ou d'une catégorie d'aliments.
